# EUROPÄISCHE PATENTANMELDUNG

(11) **EP 1 637 752 A2**
(43) Veröffentlichungstag der Anmeldung: **22.03.2006**
(21) Anmeldenummer: 05019946.2
(22) Anmeldetag: 14.09.2005
(51) Int. Cl.: F16C 11/06

(54) **Zapfengelenk**

(30) Priorität: 16.09.2004 DE 102004044776
(71) Anmelder: Daimlerchrysler AG, 70567 München (DE)
(72) Erfinder: Hesse, Thomas, 27356 Rotenburg (DE); Wendt, Mareike, Dr., 25486 Alveslohe (DE); Werneke, Dieter, 21149 Hamburg (DE)

(57) **Zusammenfassung**

2.1. Es wird ein Zapfengelenk (1) für ein Kraftfahrzeug vorgeschlagen, mit einem Gelenkzapfen (6), der in einem Gehäuse (2) gelagert ist und dessen Zapfenabschnitt (5) aus dem Gehäuse (2) herausragt und mit einem zweiten Bauteil (4) verbunden ist, mit einer Balgdichtung (11), die einerseits an dem Gehäuse (2) ist und andererseits den Zapfenabschnitt (5) vorgespannt umschließt.
2.2. Erfindungsgemäß ist bei dem zapfengelenk (1) vorgesehen, dass die Balgdichtung (11) Falten mit radial angeordneten Faltenrücken und -tälern (21,22) aufweist, die bei Torsionsbeanspruchung Werkstoffspannungen in der Balgdichtung (11) gegenüber einer Ausführung ohne Falten herabsetzen.
2.3. Anwendung in Kraftfahrzeugen, insbesondere Personenkraftwagen.

## Beschreibung

Die Erfindung betrifft ein Zapfengelenk nach dem Oberbegriff des Anspruchs 1.

Aus der Patentschrift EP 1 000 260 B1 ist ein Zapfengelenk bekannt, das eine einen Zapfenabschnitt umschließende Balgdichtung aufweist, wobei Dreh- und Schiebebewegungen zwischen dem Zapfen und der Balgdichtung möglich sind. Die Balgdichtung ist als rotationssymmetrisches Bauteil ausgeführt, das unter Einhaltung der zulässigen Werkstoffspannungen nur geringfügig um die Längsachse tordierbar ist.

Aufgabe der Erfindung ist es demgegenüber, ein Zapfengelenk zur Verfügung zu stellen, bei dem eine größere Torsion der Balgdichtung ohne Werkstoffschädigung möglich ist.

Diese Aufgabe wird durch ein Zapfengelenk mit den Merkmalen des Anspruchs 1 gelöst.

Das erfindungsgemäße Zapfengelenk zeichnet sich durch eine Balgdichtung mit Falten aus, deren Faltenrücken und -täler radial angeordnet sind und die bei Torsionsbeanspruchung Werkstoffspannungen in der Balgdichtung gegenüber einer Ausführung ohne Falten herabsetzen. Durch die Anordnung von Taschen, die gleichmäßig am Umfang des Dichtbalgs verteilt sind, werden die Falten gebildet. Die Falten weisen Faltenrücken und -Täler auf, die radial auf die Balgdichtungslängsachse zulaufen. Der Ausdruck "radial angeordnet" umfasst alle Faltenrücken und -täler, bei denen sich die die Faltenrücken und -täler in Längsrichtung symmetrisch teilenden Mittenebenen in der Balgdichtungslängsachse schneiden. Die Taschen sind in vorteilhafter Weise auf einer zur Balgdichtungslängsachse senkrechten Kreisringfläche oder einem Abschnitt des Dichtbalgs in Form eines Kegelstumpfs oder eines Kugelabschnitts angeordnet. Ferner kann der Dichtbalg im Bereich der Taschen jede beliebige Form, wie beispielsweise eine geknickte und/oder gebogene Kontur, annehmen. Durch Schnitt der die Faltenrücken- und Täler in Längsrichtung symmetrisch teilenden Mittenebenen mit der Dichtbalgkontur, sind Rücken- und Tallinien erzeugbar. Die in eine zur Balgdichtungslängsachse senkrechten Ebene projizierten und verlängerten Rücken- und Tallinien schneiden sich in einer Ausführungsform in der Balgdichtungslängsachse in einem Punkt. In einer alternativen Ausführungsform mit auf einem zylindrischen Abschnitt des Dichtbalgs angeordneten Taschen schneiden sich die Rücken- und Tallinien die Balgdichtungslängsachse nicht.
Die im Weiteren als radiale Falten bezeichneten Falten ermöglichen eine Torsion der Balgdichtung um deren Längsachse, ohne den Werkstoff unter Betriebsbedingungen über die zulässigen Grenzen zu belasten.

In Ausgestaltung der Erfindung ist im Bereich der Falten die Wandstärke der Balgdichtung geringer als in den anderen Bereichen. Eine Verringerung der Wandstärke im Bereich der Falten reduziert vorteilhaft die Torsionssteifigkeit der Balgdichtung, d.h. die erforderlichen Kräfte zum Verdrillen bzw. Tordieren der Balgdichtung sind reduziert.

In weiterer Ausgestaltung der Erfindung weist ein Zapfenabschnitt eine umlaufende Nut auf, an der die Balgdichtung unter Vorspannung anliegt. Ein einen Zapfenabschnitt und eine Kugel umfassender Gelenkzapfen ist in einem Gehäuse gelagert. Die Balgdichtung dichtet an dem Zapfenabschnitt und dem Gehäuse. Die beispielsweise aus Elastomerwerkstoff hergestellte Balgdichtung ist so ausgelegt, dass dieser unter Vorspannung in die an dem Zapfenabschnitt vorgesehen Nut eingeschnappt ist. Die Nut sichert die Balgdichtung gegen axiales Verrutschen auf dem Zapfenabschnitt.

In weiterer Ausgestaltung der Erfindung umschließt ein Spannring die Balgdichtung zumindest teilweise und presst diesen an den Zapfenabschnitt an. Der Spannring ist in eine in der Balgdichtung vorgesehene Nut eingelegt und erhöht durch eine zusätzliche Anpresskraft die Dichtwirkung. Über die Vorspannung des Spannringes ist einstellbar, ob eine Relativbewegung zwischen dem Zapfenabschnitt und der Balgdichtung unter üblichen Betriebsbedingungen auftritt oder nicht.

In weiterer Ausgestaltung der Erfindung liegt die Balgdichtung axial an dem Gegenbauteil an. Die Balgdichtung drückt aufgrund der Elastizität des Elastomerwerkstoffes gegen eine Stirnfläche des Gegenbauteils. Damit entsteht zwischen der Balgdichtung und dem Gegenbauteil eine weitere Dichtstelle, die zusätzlich zu der Abdichtung zwischen Balgdichtung und dem Zapfenabschnitt ein Eintreten von Verunreinigung in das Zapfengelenk verhindert.

Weitere Merkmale und Merkmalskombinationen ergeben sich aus der Beschreibung sowie den Zeichnungen. Ein konkretes Ausführungsbeispiele der Erfindung ist in den Zeichnungen vereinfacht dargestellt und in der nachfolgenden Beschreibung näher erläutert. Es zeigen
- Fig. 1: eine Schnittdarstellung eines erfindungsgemäßen Zapfengelenkes,
- Fig. 2: eine Balgdichtung aus Fig. 1 in perspektivischer Darstellung und
- Fig. 3: Schnitt A-A durch Falten der Balgdichtung aus Fig. 1.

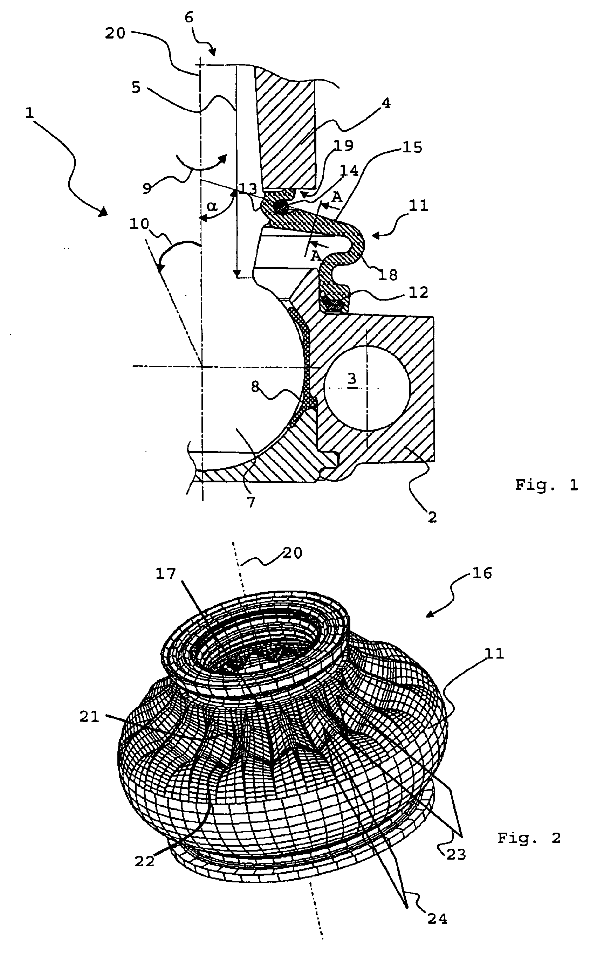

Gleiche Bauteile in den Fig. 1 bis Fig. 3 sind mit den gleichen Bezugszeichen bezeichnet.

Ein Zapfengelenk 1 gemäß Fig. 1 ist zur beweglichen Verbindung zweier Bauteile vorgesehen. Ein nicht dargestelltes Bauteil ist mit einem Gehäuse 2 des Zapfengelenkes 1 verbunden. Das Gehäuse 2 weist zur Befestigung an dem nicht dargestellten Bauteil ein Anschraubauge 3 auf, gleichermaßen kann beispielsweise auch eine Gewindestange vorgesehen sein. Ein Gegenbauteil 4 ist mit einem aus dem Gehäuse 2 herausragenden Zapfenabschnitt 5 eines Gelenkzapfens 6 verbunden. Dazu ist ein Bereich des Zapfenabschnitts 5 konisch ausgebildet und in einer im Gegenbauteil 4 konisch ausgebildeten Bohrung spielfrei angeordnet. Das nicht dargestellte Bauteil ist beispielsweise ein Achsschenkel einer Radaufhängung, der über das Zapfengelenk 1 mit einem beispielsweise als Querlenker ausgeführten Gegenbauteil 4 verbunden ist.

Der in dem Gehäuse 2 angeordnete Gelenkzapfen 6 kann Dreh- und Kippbewegungen 9,10 ausführen. Hierzu umfasst der Gelenkzapfen 6 eine Kugel 7, die in einer im Gehäuse 2 angeordneten Gelenkschale 8 gelagert ist.

Eine elastische Balgdichtung 11 aus vorzugsweise Elastomerwerkstoff ist zwischen dem Gehäuse 2 und dem beweglichen Gelenkzapfen 6 angeordnet. Die Balgdichtung 11 verhindert ein Eindringen von Schmutz und Feuchtigkeit in die Gelenkschale 8. Das Gehäuse 2 und teilweise der von der Balgdichtung 11 umschlossene Raum sind mit Schmierstoff gefüllt, die Balgdichtung 11 verhindert dabei ein Austreten des Schmierstoffes.

Mit dem Gehäuse 2 ist eine erste Seite der Balgdichtung 11 fest verbunden. Hierzu ist in der Balgdichtung 11 ein Spannring 12 eingelegt, der die Balgdichtung 11 mit dem Gehäuse 2 unverschieblich verbindet. Alternativ oder zusätzlich kann die Balgdichtung 11 beispielsweise durch Vulkanisation, Verkleben oder durch eine formschlüssige Verbindung wie einen Einrollvorgang an dem Gehäuse 2 angebunden sein.

In einer im Zapfenabschnitt 5 angeordneten umlaufenden Nut 13 liegt eine zweite Seite der Balgdichtung 11 an. Ein Runddrahtring 14 ist in der Balgdichtung 11 eingelegt. Der Runddrahtring 14 presst die Balgdichtung 11 gegen den Zapfenabschnitt 5, so dass die Balgdichtung 11 den Zapfenschnitt 5 im Bereich der Nut 13 mit Vorspannung zumindest teilweise umschließt. Die Anpresskraft ist so gewählt, dass keine Relativbewegung zwischen der Balgdichtung 11 und dem Zapfenabschnitt 5 bei unter Betriebsbedingungen üblichen Verdrehwinkeln von z.B. ±30° auftritt. Die Balgdichtung 11 haftet auf dem Zapfenabschnitt 5 und dichtet im Nutbereich die Gelenkbauteile wie Kugel 7 und Gelenkschale 8 zuverlässig gegen Schmutz- und Feuchtigkeitseintritt ab.
Da kein Gleiten zwischen der Balgdichtung 11 und dem Gelenkzapfen 6 bzw. dem Zapfenabschnitt 5 auftritt, führt eine Verdrehung 9 des Gelenkzapfens 6 zu dem Gehäuse 2 zu eine Verdrehung bzw. einer Verdrillung der Balgdichtung 11. Um die aufgrund der Verdrehung 9 in der Balgdichtung 11 auftretenden Spannungen gering zu halten und eine ausreichende Lebensdauer der Balgdichtung 11 unter Betriebsbedingungen zu gewährleisten, sind gemäß Fig. 2 an einer Ringfläche 15 der Balgdichtung 11 Falten 16 mit radial zur Balgdichtungslängsachse 20 verlaufenden Faltenrücken und -tälern 21,22 angeordnet. Die Falten sind im Folgenden als radiale Falten bezeichnet. Die die Faltenrücken und -täler symmetrisch teilende Mittenebenen 23,24 schneiden sich in der Balgdichtungslängsachse 20. Durch Schnitt der Mittenebenen 23,24 mit der Balgdichtungskontur sind Rücken- und Tallinien erzeugbar. Die in eine zur Balgdichtungslängsachse 20 senkrechten Ebene projizierten und verlängerten Rücken- und Tallinine schneiden sich mit der Balgdichtungslängsachse 20 in einem Punkt. Gemäß Fig. 1 ist die Ringfläche 15 die Mantelfläche eines Kegelstumpfs, die beispielsweise unter einem Winkel a von ca. 80° gegenüber der Balgdichtungslängsachse 20 geneigt ist. In einer alternativen Ausführungsform weist der Winkel α einen Wert von 90° auf, in weiteren Ausführungsformen kann der Winkel einen Wert kleiner 80° aufweisen. Die radialen Falten können sich ganz oder teilweise über die Breite der Mantelfläche erstrecken. Die Falten 16 können auch aus Taschen 17 unterschiedlicher Tiefe gebildet sein. Veränderliche Taschentiefen können sowohl in einer Tasche 17 als auch zwischen benachbarten Taschen 17 auftreten.

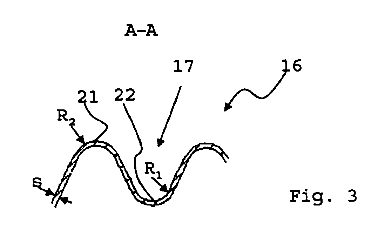

Eine Verdrehung der Balgdichtung 11 wird durch eine Verformung im Bereich der radialen Falten 16 realisiert. Dadurch sind Werkstoffspannungen an kritischen Stellen der Balgdichtung 11 deutlich reduziert. Die Falten 16 sind als Taschen 17 ausgebildet, die regelmäßig am gesamten Umfang der Ringfläche 15 angeordnet sind. Die Übergänge von einer Tasche 17 zur Nächsten sowie Übergänge im Taschengrund sind zur Reduzierung von Werkstoffspannungen beispielsweise mit Radien R1 und R2 ausgeführt, siehe Fig. 3.

Im Bereich der Falten 16 ist die Wandstärke s bevorzugt geringer als in anderen Bereichen der Balgdichtung 11. Durch die Verminderung der Wandstärke lässt sich der Balgdichtung 11 noch leichter verdrehen. Die Falten 16 versteifen jedoch die Ringfläche 15 gegen Auswölben, so dass die Balgdichtung 11 bei Kippbewegungen 10 im Wesentlichen im Wulstbereich 18 verformt wird, siehe Fig. 1. Dadurch ist in vorteilhafter Weise sichergestellt, dass sich die Ringfläche 15 der Balgdichtung 11 selbst mit verminderter Wandstärke nicht auswölbt und durch Berührung mit dem Gegenbauteil 4 verschleißt.

In einem modifizierten Ausführungsbeispiel ist die Balgdichtung 11 in dem Zapfengelenk 1 so angeordnet, dass grundsätzlich eine Relativbewegung, d.h. eine Gleitbewegung zwischen dem Gelenkzapfen 6 und der Balgdichtung 11 möglich ist. Der Runddrahtring 14 muss eine definierte Vorspannung aufweisen, die einerseits die Relativbewegung ermöglicht und andererseits eine ausreichend hohe Druckkraft zum Abdichten der Balgdichtung 11 gegenüber dem Gelenkzapfen 6 aufbringt. Da eine Relativbewegung der Balgdichtung 11 aufgrund sich ändernder Reibverhältnisse zwischen dem Elastomerwerkstoff der Balgdichtung 11 und einem Stahlwerkstoff des Gelenkzapfens 6 beispielsweise durch Ausdampfen von Weichmachern nicht über die gesamte Lebensdauer garantierbar ist, ist die Balgdichtung 11 zur Sicherheit torsionsweich, d.h. mit radialen Falten 16 ausgeführt. Ein Anhaften der Balgdichtung 11 an dem Gelenkzapfen 6 führt damit nicht zu einer Funktionsbeeinträchtigung des Zapfengelenkes 1 durch Versagen der Balgdichtung 11 aufgrund Werkstoffüberbeanspruchung. Zur Erhöhung der Dichtwirkung zwischen dem Zapfenabschnitt 5 und der Balgdichtung 11 ist als weitere Dichtstelle eine axiale Anlage 19 der Balgdichtung 11 an dem Gegenbauteil 4 vorgesehen, siehe Fig. 1. Diese Ausführung empfiehlt sich vorzugsweise, wenn Relativbewegung zwischen dem Zapfenabschnitt 5 bzw. dem Gegenbauteil 4 und der Balgdichtung 11 auftreten.

### Bezugszeichenliste

- 1: Zapfengelenk
- 2: Gehäuse
- 3: Anschraubauge
- 4: Gegenbauteil
- 5: Zapfenabschnitt
- 6: Gelenkzapfen
- 7: Kugel
- 8: Gelenkschale
- 9: Drehbewegung
- 10: Kippbewegung
- 11: Balgdichtung
- 12: Spannring
- 13: Umlaufende Nut
- 14: Runddrahtring
- 15: Ringfläche
- 16: Falten
- 17: Tasche
- 18: Wulstbereich
- 19: Axiale Anlage
- 20: Balgdichtungslängsachse
- 21: Faltenrücken
- 22: Faltental
- 23: Mittenebene Faltenrücken
- 24: Mittenebene Faltental

## Patentansprüche

1. Zapfengelenk (1) für ein Kraftfahrzeug, mit
- einem Gelenkzapfen (6), der in einem Gehäuse (2) gelagert ist und dessen Zapfenabschnitt (5) aus dem Gehäuse (2) herausragt und mit einem Gegenbauteil (4) verbunden ist,
- einer Balgdichtung (11), die einerseits das Gehäuse (2) und andererseits den Zapfenabschnitt (5) vorgespannt umschließt,
**dadurch gekennzeichnet, dass**
die Balgdichtung (11) Falten mit radial angeordneten Faltenrücken und -tälern (21,22) aufweist, die bei Torsionsbeanspruchung Werkstoffspannungen in der Balgdichtung (11) gegenüber einer Ausführung ohne Falten herabsetzen.

2. Zapfengelenk nach Anspruch 1,
**dadurch gekennzeichnet, dass**
im Bereich der Falten (16) die Wandstärke der Balgdichtung (11) geringer als in den anderen Bereichen ist.

3. Zapfengelenk nach einem der Ansprüche 1 bis 2,
**dadurch gekennzeichnet, dass**
der Zapfenabschnitt (5) eine umlaufende Nut (13) aufweist, an der die Balgdichtung (11) unter Vorspannung anliegt.

4. Zapfengelenk nach einem der Ansprüche 1 bis 3,
**dadurch gekennzeichnet, dass**
ein Spannring (14) die Balgdichtung (11) zumindest abschnittsweise umschließt und an den Zapfenabschnitt (5) anpresst.

5. Zapfengelenk nach einem der Ansprüche 1 bis 4,
**dadurch gekennzeichnet, dass**
die Balgdichtung (11) axial an dem Gegenbauteil (4) anliegt.
